# EUROPEAN PATENT SPECIFICATION

(11) **EP 3 565 335 B1**
(45) Date of publication and mention of the grant of the patent: **18.08.2021**
(21) Application number: 17888154.6
(22) Date of filing: 26.12.2017
(51) Int. Cl.: H04L 5/00, H04W 72/04, H04W 74/08

(54) **USER TERMINAL AND WIRELESS COMMUNICATIONS METHOD**
BENUTZERENDGERÄT UND VERFAHREN ZUR DRAHTLOSEN KOMMUNIKATION
TERMINAL UTILISATEUR ET PROCÉDÉ DE COMMUNICATIONS SANS FIL

(30) Priority: 27.12.2016 JP 2016254326
(43) Date of publication of application: 06.11.2019
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); MU, Qin, Beijing 100190 (CN); LIU, Liu, Beijing 100190 (CN); WANG, Lihui, Beijing 100190 (CN); WANG, Jing, Beijing 100190 (CN); JIANG, Huiling, Beijing 100190 (CN)
(74) Representative: Hoffmann Eitle
(86) International application number: PCT/JP2017/046561
(87) International publication number: WO 2018/124030

(56) References cited:
- WO-A2-2014/165678
- JP-A- 2013 157 822
- NTT DOCOMO INC: "Monitoring of DL control channel for NR", 3GPP DRAFT; R1-1612716 , vol. RAN WG1, no. Reno, USA; 20161114 - 20161118 13 November 2016 (2016-11-13), XP051176659, Retrieved from the Internet: URL:http://www.3gpp.org/ftp/Meetings_3GPP_ SYNC/RAN1/Docs/ [retrieved on 2016-11-13]
- NTT DOCOMO: 'Initial views on DL control channel design' 3GPP 01 October 2016, XP051159872
- CONVIDA WIRELESS: 'On Downlink Control Channel Design for New Radio' 3GPP TSG-RAN WG1 #86B R1-1610379 01 October 2016, XP051160042

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "5G+ (plus)," "NR (New Radio)," "NX (New radio access)," "New RAT(Radio Access Technology)," "FX (Future generation radio access)," "LTE Rel. 13," "LTE Rel. 14," "LTE Rel. 15" or later versions) are under study.

In LTE Rel. 10/11, carrier aggregation (CA) to integrate multiple component carriers (CC) is introduced in order to achieve broadbandization. Each CC is configured with the system bandwidth of LTE Rel. 8 as one unit. Furthermore, in CA, a plurality of CCs of the same radio base station (referred to as an "eNB" (evolved Node B), a "BS" (Base Station) and so on) are configured in a user terminal (UE: User Equipment).

Meanwhile, in LTE Rel. 12, dual connectivity (DC), in which multiple cell groups (CGs) formed by different radio base stations are configured in a UE, is also introduced. Each cell group is comprised of at least one cell (CC). In DC, since multiple CCs of different radio base stations are integrated, DC is also referred to as "inter-eNB CA."

Also, in existing LTE systems (LTE Rel. 8 to 12), frequency division duplex (FDD), in which downlink (DL) transmission and uplink (UL) transmission are made in different frequency bands, and time division duplex (TDD), in which downlink transmission and uplink transmission are switched over time and made in the same frequency band, are introduced.

Non-Patent Literature 2 describes monitoring of DL control channel for New Radio, NR, wherein the different seach spaces corresponding to different numerologies are considered.

Patent Literature 1 describes enhanced physical downlink control channel (EPDCCH). A user equipment (UE) may receive a first type (e.g., type 1) EPDCCH common search space (CSS) subframe for example is a subset of subframes. The UE may monitor first type downlink control information (DCI), for example perhaps within the first type EPDCCH CSS subframe.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non-Patent Literature 2: 3GPP DRAFT; R1-1612716; NTT DOCOMO INC: "Monitoring of DL control channel or NR"

Patent Literature 1 : WO 2014/165678 A2

### Summary of Invention

### Technical Problem

Future radio communication systems (for example, 5G, NR, etc.) are expected to realize various radio communication services so as to fulfill varying requirements (for example, ultra-high speed, large capacity, ultra-low latency, etc.). For example, regarding 5G/NR, studies are in progress to provide radio communication services, referred to as "eMBB (enhanced Mobile Broad Band)," "IoT (Internet of Things)," "mMTC (massive Machine Type Communication)," "M2M (Machine To Machine)," and "URLLC (Ultra Reliable and Low Latency Communications)."

In addition, 5G/NR is expected to support flexible use of numerologies and frequencies, and realize a dynamic frame formats. A "numerology" refers to, for example, a set of communication parameters (for example, subcarrier spacing, bandwidth, etc.) applied when transmitting/receiving certain signals.

However, how to control transmission/receipt in communication when different numerologies (different subcarrier spacings, different bandwidths, etc.) from those of existing LTE systems are supported is not decided yet. Furthermore, there is also a possibility that multiple numerologies are supported so as to meet a variety of radio communication services. In this case, using a control technique for existing LTE systems on an as-is basis may disable adequate transmission and/or receipt of signals (for example, transmission and/or receipt of downlink control channels), and it then follows that the requirements for each radio communication service cannot be fulfilled.

The present invention has been made in view of the above, and it is therefore an object of the present invention to provide a user terminal and a radio communication method to enable proper communication in a radio communication system that supports different numerologies than existing LTE systems.

### Solution to Problem

This object is accomplished by the subject-matter of the independent claims. The dependent claims concern particular embodiments.

The scope of the present invention is determined only by the scope of the appended claims.

### Advantageous Effects of Invention

According to the present invention, it is possible to communicate properly in a radio communication system that supports different numerologies than existing LTE systems.

### Brief Description of Drawings

FIG. 1 is a diagram to show examples of possible downlink control channel candidates when a plurality of SCSs are used;
FIG. 2 is a diagram to show an example of configuring C-SSs according to communication categories (communication services, etc.);
FIG. 3 is a diagram to show an example of random access procedures;
FIG. 4 is a diagram to show an example of how PRACH resource sets and C-SSs are associated with each other;
FIGs. 5A and 5B are diagrams to illustrate methods of transmitting C-SSs associated with PRACH resource sets;
FIGs. 6A and 6B are diagrams to illustrate methods of transmitting C-SSs associated with PRACH resource sets;
FIG. 7 is a diagram to show an example of how PRACH resource sets and transmission features of C-SSs are associated with each other;
FIGs. 8A and 8B are diagrams to illustrate transmission methods based on transmission features of C-SSs associated with PRACH resource sets;
FIGs. 9A and 9B are diagrams to illustrate transmission methods based on C-SS transmission features associated with PRACH resource sets;
FIG. 10 is a diagram to show an example of a schematic structure of a radio communication system according to an embodiment of the present invention;
FIG. 11 is a diagram to show an example of an overall structure of a radio base station according to an embodiment of the present invention;
FIG. 12 is a diagram to show an example of a functional structure of a radio base station according to an embodiment of the present invention;
FIG. 13 is a diagram to show an example of an overall structure of a user terminal according to an embodiment of the present invention;
FIG. 14 is a diagram to show an example of a functional structure of a user terminal according to an embodiment of the present invention; and
FIG. 15 is a diagram to show an example hardware structure of a radio base station and a user terminal according to one embodiment of the present invention.

### Description of Embodiments

In existing LTE systems, a base station transmits downlink control information (DCI) to a UE using a downlink control channel (for example, PDCCH (Physical Downlink Control Channel), enhanced PDCCH (EPDCCH (Enhanced PDCCH), etc.). Transmission of downlink control information may be interpreted as transmission of a downlink control channel.

DCI may be scheduling information, including at least one of, for example, data-scheduling time/frequency resources, transport block information, data modulation scheme information, HARQ retransmission information, demodulation RS information, and so on. DCI that schedules receipt of DL data and/or measurements of DL reference signals may be referred to as "DL assignment" or "DL grant," and DCI that schedules transmission of UL data and/or transmission of UL sounding (measurement) signals may be referred to as "UL grant." DL assignment and/or UL grant may include information related to the resources, sequences, transmission formats and so on of channels for transmitting UL control signals (UCI: Uplink Control Information) such as HARQ-ACK feedback in response to DL data, channel measurement information (CSI: Channel State Information) and so on. In addition to DL assignment and UL grant, DCI for scheduling UL control signals (UCI: Uplink Control Information) may be defined.

A UE is configured to monitor a set of a predetermined number of downlink control channel candidates. Monitoring here means, for example, attempting to decode each downlink control channel for the target DCI format, in the set. Such decoding is also referred to as "blind decoding (BD)" or "blind detection." The downlink control channel candidates are also referred to as "BD candidates," "(E)PDCCH candidates," and so on.

The set of downlink control channel candidates (multiple downlink control channel candidates) to be monitored is also referred to as "search space." A base station places DCI in a predetermined downlink control channel candidates included in the search space. The UE performs blind decoding for one or more candidate resources in the search space, and detects the DCI addressed to the UE. The search space may be configured by high layer signaling that is common between users, or may be configured by user-specific high layer signaling.

In existing LTE (LTE Rel. 8 to 12), a plurality of aggregation levels (ALs) are provided in the search space for the purpose of link adaptation. The ALs correspond to the numbers of control channel elements (CCEs)/enhanced control channel elements (ECCEs: Enhanced CCEs) that constitute DCI. Also, the search space is configured so that there are multiple downlink control channel candidates for a given AL. Each downlink control channel candidate is comprised of one or more resource units (CCEs and/or ECCEs).

Cyclic redundancy check (CRC) bits are attached to the DCI. The CRC is masked (scrambled) using UE-specific identifiers (for example, cell-radio network temporary identifiers (C-RNTIs)) or a system-common identifier. The UE can detect the DCI where the CRC is scrambled using the C-RNTI for the subject terminal, and the DCI where the CRC is scrambled using the system-common identifier.

Also, as for the search spaces, there are a common search space (C-SS) that is configured for UEs on a shared basis, and a UE-specific search space (UE-SS) that is configured for each UE. In the UE-specific search space for the existing LTE PDCCH, the ALs (=the numbers of CCEs) are 1, 2, 4 and 8. The numbers of BD candidates defined in association with the ALs = 1, 2, 4 and 8 are 6, 6, 2 and 2, respectively.

Now, 5G/NR is required to support flexible use of numerologies and frequencies, and realize dynamic frame formats. Here, a numerology refers to a set of frequency-domain and/or time domain-communication parameters (for example, at least one of the subcarrier spacing (SCS), the bandwidth, the duration of symbols, the duration of cyclic prefixes (CPs), the duration of transmission time intervals (TTIs), the number of symbols per TTI, the format of radio frames, the filtering process, the windowing process and so on).

For example, for 5G/NR, research is under way to support multiple numerologies and apply different numerologies to different communication services. For example, a high (wide) subcarrier spacing (SCS) may be applied to URLLC for reduce latency. Meanwhile, an SCS that is lower (narrower) than that of URLLC may be applied to eMBB from the perspective of ensuring spectral efficiency, and an SCS that is lower (narrower) than that of URLLC (and eMBB) may be applied to mMTC in order to reduce power consumption.

In this way, 5G/NR is expected to support multiple services that require different communication features (different numerologies, for example). Different numerologies may be time-multiplexed and/or frequency-multiplexed and assigned to one carrier.

However, in existing LTE systems, a user terminal detects (supports) only one common search space, and so far no studies have been made to provide a search space that is compatible with multiple numerologies. In existing LTE, since the SCS is fixed at 15 kHz, a UE has heretofore decoded the BD candidates on the assumption that only one SCS (= 15 kHz) is applied. On the other hand, in the event NR is employed, even if only one carrier is in use, the SCS value can be determined based on variable (scalable) numerologies -- for example, from 15 kHz, 30 kHz, 60 kHz, 120 kHz, 240 kHz and so on. Also, in a single carrier, signals to which a plurality of SCSs are respectively applied can be transmitted and received at the same time.

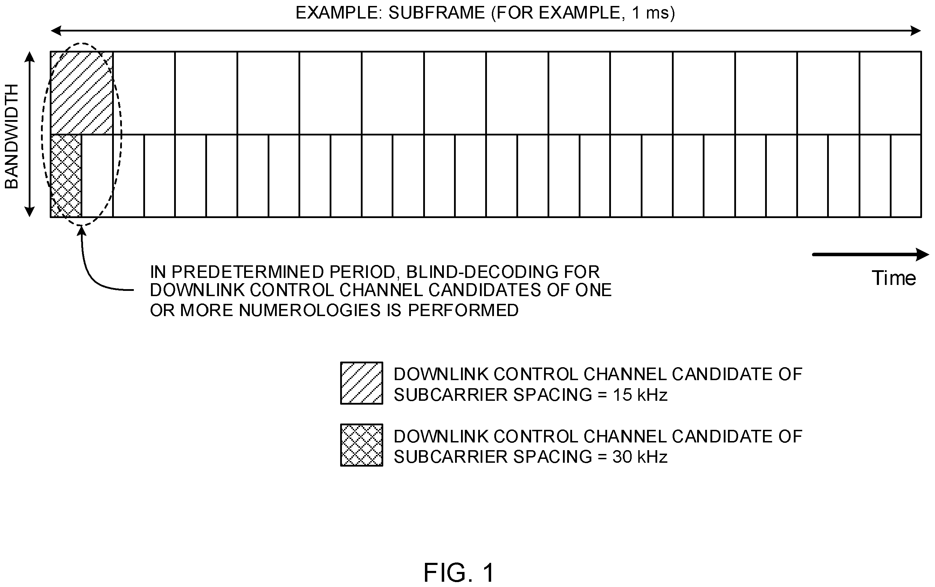

FIG. 1 is a diagram to show examples of possible downlink control channel candidates when a plurality of SCSs are used. FIG. 1 shows a predetermined range of radio resources in a given carrier. In this example, one subframe (for example, one ms) and a predetermined bandwidth are shown, defining the "predetermined range." The predetermined bandwidth may be the system bandwidth or may be a subband, a predetermined number of resource blocks and so on. Note that some or all of the signals of a plurality of SCSs may be superimposed on the same resources. Also, the downlink control channel candidates of different SCSs may be transmitted and received in different cycles.

In the example of FIG. 1, the UE needs to blind-decode the downlink control channels of multiple numerologies (here, multiple SCSs), simultaneously, in a given period (the top symbol of the subframe). Meanwhile, in existing LTE, which is based on the assumption that the SCS is 15 kHz, the UE cannot blind-decode the downlink control channel of the SCS of 30 kHz. In this way, if the search space for existing LTE is used in NR on an as-is basis, downlink control channels cannot be decoded, and this might lead to problems such as a decrease in throughput, a deterioration of communication quality and so on.

So, the present inventors have worked on a search space design that can support multiple numerologies, and found out that, from the perspective of supporting multiple communication services, it is desirable to configure search spaces that correspond to individual communication services (and/or user capabilities).

Then, the present inventors have come up with the idea of introducing a structure, in which one or more search spaces (for example, C-SSs) that correspond to different transmission features (for example, numerologies) are configured, and in which a user terminal controls the detection of one or more C-SSs based on information that is reported in advance and/or based on information about the capabilities and/or the like which the user terminal supports itself.

By this means, in a radio communication system where multiple communication services with different numerologies are supported, it is possible to transmit and receive search spaces (downlink control information) using appropriate transmission features (properties). As for the transmission features, it is possible to use numerologies including at least one of the subcarrier spacing, the bandwidth and the time intervals for use for transmission/receipt (for example, slots, minislots, and so on).

Also, the present inventors have come up with the idea of associating one or more C-SSs having different transmission features, with PRACH resources (and/or PRACH configurations), and controlling the transmission features to apply to C-SS transmission based on the PRACH resources which user terminals use in PRACH transmission. By this means, it is possible to transmit downlink control information based on appropriate transmission features, in random access procedures used in initial access and so on.

Now, embodiments of the present invention will be described in detail below with reference to the accompanying drawings. Although examples will be described with the following embodiments where a search space refers to a common search space (C-SS), this is by no means limiting. A search space may refer to a UE group-common search space, refer to a UE-specific search space, refer to a UE-specific search space and a common search space, or refer to other search spaces.

### (First Aspect)

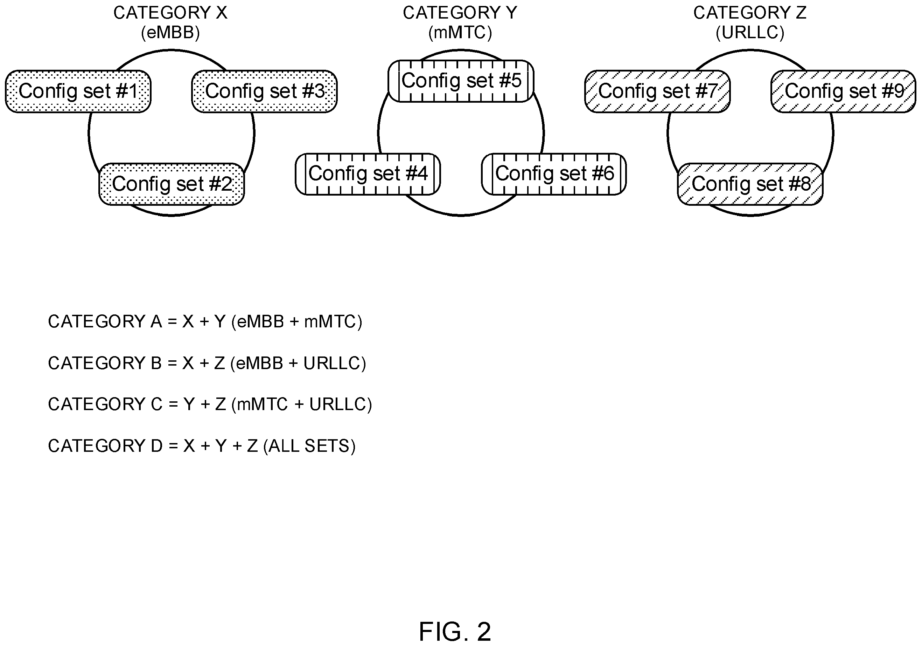

FIG. 2 shows an example of a plurality of C-SSs (also referred to as a "C-SS set"). In FIG. 2, for every predetermined category (here, categories X, Y and Z), a plurality of C-SS sets are defined. Each category may be associated with communication services and/or predetermined numerologies (SCS, for example). In the example shown here, category X corresponds to eMBB, category Y corresponds to mMTC, and category Z corresponds to URLLC, but this is not limiting.

In addition, in the case shown in FIG. 2, C-SS set #1 to #3 (Config set #1 to #3) are configured in category X, C-SS set #4 to #6 are configured in category Y, and C-SS set #7 to #9 are configured in category Z. In this way, in FIG. 2, three C-SS sets are configured for each subset that corresponds to a different communication service (or each category), but it suffices to configure only one C-SS set in each category. The number of C-SS sets to be included may be set different between varying categories (subsets associated with each communication service).

Multiple C-SS sets can be transmitted by applying different transmission features. As different transmission features here, for example, varying numerologies (where at least one of the subcarrier spacing, the duration of transmission time intervals (TTIs), the bandwidth and the symbol duration vary) can be applied. Also, it is not absolutely necessary to apply different transmission features to certain C-SS sets (for example, C-SS sets belonging to the same category and/or communication service).

The network (for example, a radio base station) reports information about the number of C-SS sets transmitted (configured) in a given carrier, to a user terminal. For example, the radio base station reports information about the number of C-SS sets configured in each communication service (category) and the transmission features of each C-SS to the user terminal. The information about the number of C-SS sets and the transmission features of each C-SS can be reported to the user terminal using broadcast information (broadcast) and/or system information and the like. Alternatively, when each C-SS set is configured, this information regarding the number of C-SS sets may be included in higher layer parameters to be reported to the user terminal (for example, at least one of resource set information, numerology information, RS (reference signal) information, antenna structure information, and so on).

A user terminal that supports (or uses) only one communication service may be controlled to monitor only those C-SSs associated with this one communication service. A user terminal that supports (or uses) a plurality of communication services may be controlled to monitor a plurality of C-SSs associated with these multiple communication services.

Even if a user terminal is aware of the information pertaining to all the C-SS sets configured, the user terminal may be controlled not to monitor (or ignore) C-SS sets that are associated with communication services which the user terminal does not support (or which the user terminal does not use to communicate). In this case, it is not necessary to monitor C-SS sets that are unnecessary for (or not used by) the user terminal.

Categories (here, categories X to Z) that correspond to each communication service and/or numerology may be defined and reported to (configured in) the user terminal, or the C-SS configurations which each UE category can support may be defined and reported to the terminal. The C-SS configurations that can be supported in each UE category can be defined by combining categories X to Z. For example, the categories can be defined so that category A supports eMBB and mMTC (category A = X + Y), category B supports eMBB and URLLC (category B = X + Z), category C supports mMTC and URLLC (category C = Y + Z), and category D supports all sets of eMBB, mMTC and URLLC (category D = X + Y + Z).

In a given carrier, the network (for example, a radio base station) can transmit one or more C-SSs from any C-SS set. For example, given the C-SS sets shown in FIG. 2, the radio base station transmits C-SS sets 1 and 2. In this case, C-SS sets 1 and 2 have only to be configured in advance in the user terminal.

When multiple C-SSs are configured in a subset (for example, category) that is associated with a predetermined service, if the user terminal supports this predetermined service (or if the user terminal has user capabilities to meet this predetermined service), the user terminal monitors all the C-SS sets that are configured in the subset. In this case, based on the assumption that the user terminal monitors all the C-SSs of this subset, the radio base station can use an arbitrary C-SS of this subset and allocate downlink control information to the C-SS.

Alternatively, if a plurality of C-SSs are configured in a subset that corresponds to a predetermined service, if the user terminal supports the predetermined service, the user terminal may be controlled to monitor at least one C-SS set of this subset. In this case, the number of C-SSs the user terminal has to monitor can be reduced.

Furthermore, the radio base station may transmit one or a plurality of C-SSs respectively from subsets (for example, different categories) corresponding to different communication services. For example, the radio base station transmits C-SS sets 1 and 4 in the C-SS set shown in FIG. 2. In this case, C-SS sets 1 and 4 (or categories X and Y) can be configured in advance for the user terminal.

When multiple C-SSs belonging to different subsets that are associated with different communication services are configured for the user terminal, it is also possible that the user terminal does not support (or use) the communication services associated with these C-SS sets configured. In this case, the user terminal is controlled not to monitor C-SSs that correspond to communication services which this user terminal does not support (or use). By this means, the user terminal has only to monitor the C-SSs that correspond to the communication services the user terminal supports, so that it is possible to avoid monitoring unnecessary C-SSs.

In this way, the user terminal control the monitoring of one or a plurality of C-SSs (for example, C-SSs with different transmission features) based on C-SS set information reported (configured) from the radio base station and/or the communication services that the user terminal supports (or UE capability information). This allows the user terminal to monitor appropriate C-SSs even when C-SSs with different transmission features such as numerologies are supported in the communication system.

### (Second Aspect)

Now, in accordance with a second aspect of the present invention, which is a continuation of the above described first aspect, the C-SS transmission method in random access procedures performed in the initial access operation and/or the reconnection (for example, resynchronization) operation will be described below. First, an example of random access procedures will be explained. The present embodiment may employ the random access procedures in existing LTE systems or employ the random access procedures newly defined in 5G/NR.

Existing LTE systems (for example, LTE Rel. 8 to 13) support random access procedures for establishing UL synchronization. Random access procedures include contention-based random access (also referred to as "CBRA" and so on) and non-contention-based random access (also referred to as "non-CBRA," "contention-free random access (CFRA)," "non-contention-based" and so on).

In contention-based random access (CBRA), the user terminal transmits a preamble that is randomly selected from a plurality of preambles provided for each cell (also referred to as "random access preambles," "random access channels (PRACHs)," "RACH preambles" and so on). Furthermore, contention-based random access is user terminal-initiated random access procedures, and can be used, for example, when gaining initial access, when starting or resuming UL transmission, and so on.

On the other hand, in non-contention-based random access (non-CBRA, CFRA (Contention-Free Random Access), etc.), the radio base station assigns preamble, using a downlink (DL) control channel (a PDCCH (Physical Downlink Control Channel), an EPDCCH (Enhanced PDCCH), etc.), to the user terminal, in a user terminal-specific manner, and the user terminal transmits the preamble assigned by the radio base station. Non-contention-based random access is network-initiated random access procedures, and can be used, for example, when conducting handover, when starting or resuming DL transmission, and so on (when transmission of DL retransmission command information is started or restarted in UL).

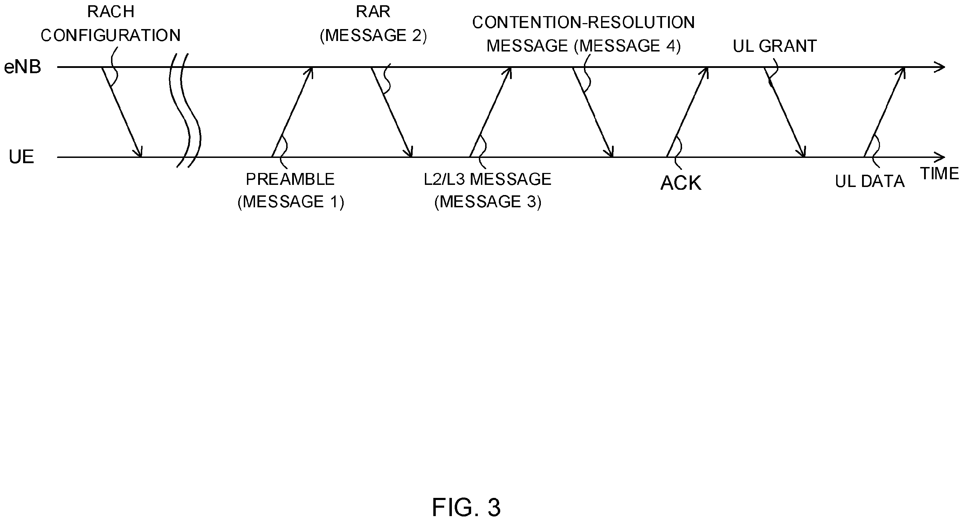

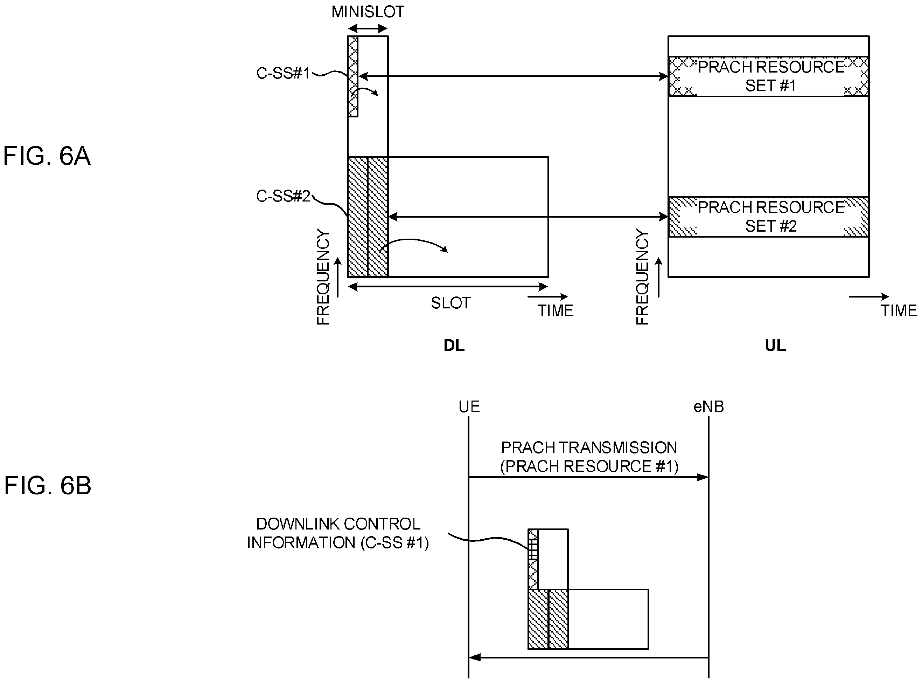

FIG. 6 is a diagram to show an example of random access procedures. In FIG. 3, the user terminal receives, in advance, information (PRACH configuration information) that indicates the configuration of a random access channel (PRACH) (PRACH configuration, RACH configuration, etc.), via system information (for example, the MIB (Mater Information Block) and/or SIBs (System Information Blocks)), higher layer signaling (for example, RRC (Radio Resource Control) signaling) and so on.

The PRACH configuration information can indicate, for example, a plurality of preambles (for example, preamble formats) that are defined on a per cell basis, offsets (PRACH frequency offsets) that indicate the starting positions of the time resources (for example, system frame indices, subframe indices and so on) and frequency resources (for example, six resource blocks (PRB: Physical Resource Block) that are used in PRACH transmission, and so on.

As shown in FIG. 3, when the user terminal transitions from idle mode (RRC_IDLE) to RRC-connected mode (RRC CONNECTED) (for example, when gaining initial access), even if UL synchronization is not established despite the fact that the user terminal is in RRC-connected mode (for example, when UL transmission is started or resumed), the user terminal can randomly select one of a plurality of preambles that are indicated by the PRACH configuration information, and transmit the selected preamble using the PRACH (message 1).

Upon detecting the preamble, the radio base station transmits a random access response (RAR) (message 2) in response to that. If the user terminal fails to receive a RAR within a predetermined period (RAR window) after the preamble is transmitted, the user terminal increases the transmission power of the PRACH and transmits the preamble again (retransmission). Note that the act of increasing the transmission power upon retransmission is also referred to as "power ramping."

Upon receiving the RAR, the user terminal adjusts the transmission timing in the UL based on the timing advance (TA) that is included in the RAR, and establishes UL synchronization. Furthermore, the user terminal transmits a higher layer (L2/L3: layer 2/layer 3) control message (message 3) in the UL resource specified by the UL grant included in the RAR. This control message contains the user terminal's identifier (UE-ID). The user terminal's identifier may be, for example, a C-RNTI (Cell-Radio Network Temporary Identifier) in the even the user terminal is in RRC-connected mode, or may be a higher layer UE-ID such as an S-TMSI (System Architecture Evolution-Temporary Mobile Subscriber Identity) in the event the user terminal is in idle mode.

In response to the higher layer control message, the radio base station sends a contention-resolution message (message 4). The contention-resolution message is transmitted based on the above-mentioned user terminal identifier included in the control message. Upon successfully detecting the contention-resolution message, the user terminal transmits an HARQ (Hybrid Automatic Repeat reQuest)-based positive acknowledgment (ACK) to the radio base station. By this means, the user terminal in idle mode transitions to RRC-connected mode.

On the other hand, if the user terminal fails to detect the contention-resolution message, the user terminal judges that contention has occurred, reselects a preamble, and repeats the random access procedures from message 1 to message 4. When learning from an ACK from the user terminal that the contention has been resolved, the radio base station transmits a UL grant to the user terminal. The user terminal starts transmitting UL data using the UL resource allocated by the UL grant.

According to the above-described contention-based random access, if the user terminal desires to transmit UL data, the user terminal can voluntarily (autonomously) start random access procedures. Also, since UL synchronization is established first and then UL data is transmitted using a UL resource that is allocated by a UL grant in a user terminal-specific manner, reliable UL transmission is made possible.

Messages (for example, message 2) in random access procedures are scheduled by downlink control information that is provided in the C-SS. In existing LTE, one C-SS is defined in random access procedures, and all user terminals perform random access procedures using one C-SS.

Meanwhile, when random access procedures and so on are performed using one C-SS in which transmission features are configured on a fixed (integrated) basis, it is difficult to transmit C-SSs that require different transmission features. For example, in a given communication service (for example, URLLC), it is desirable to apply a short TTI duration and a high subcarrier spacing in order to reduce the processing time (latency) and improve the reliability. Also, in another communication service (for example, eMMB), it is desirable to apply a lower subcarrier spacing in order to ensure spectral efficiency.

In this way, in random access procedures, it is desirable to control communication by introducing different downlink control channels (for example, C-SS) with different transmission features. Therefore, according to the second aspect of the present invention, one or a plurality of C-SSs having different transmission features are configured, and random access procedures are controlled by associating the resources (PRACH resources) and/or PRACH configurations which user terminals use in PRACH transmission, and features of C-SS transmission. Now, a case in which multiple C-SSs with different transmission features are configured, and a case in which the transmission features for one C-SS are changed and configured.

### <When Multiple C-SSs are Configured>

When multiple C-SSs are configured, multiple C-SSs (C-SS set) with varying transmission features are configured and used in random access procedures. In this case, a plurality of PRACH resource sets (and/or PRACH configuration sets) and physical resources for the multiple C-SSs having different transmission features are defined. A PRACH resource set refers to resources for use in PRACH transmission, multiple PRACH resources, among which at least one of the time (t), the frequency (f) and the code (c) varies, can be configured. The transmission features can be defined based on predetermined numerologies such as subcarrier spacing and/or the TTI duration.

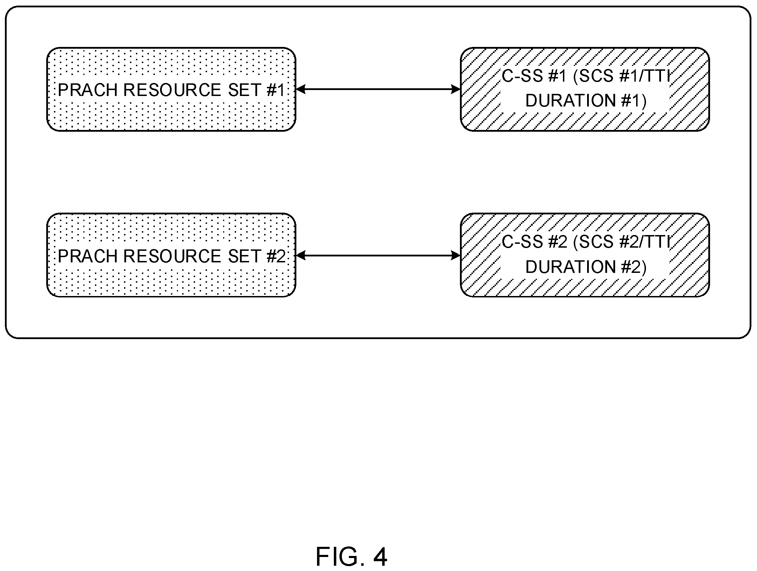

Also, PRACH resource sets and C-SSs using different transmission features are defined in association with each other. For example, PRACH resource set #1 and C-SS #1 are associated and defined, and PRACH resource set #2 and C-SS #2 are defined associated with each other (see FIG. 4). In the case shown here, the first subcarrier spacing (SCS #1) and the first TTI duration (TTI duration #1) are applied to the transmission of C-SS #1, and a second subcarrier spacing (SCS #2) and a second TTI duration (TTI duration #2) are applied to the transmission of C-SS #2. Note that the number of PRACH resource sets and the number of C-SSs are not limited to these.

Information about the associations between PRACH resource sets and C-SSs may be reported in advance from a radio base station to user terminals (reported explicitly and/or reported implicitly), or may be defined in the specification. For example, the radio base station can report information about the associations between PRACH resource sets and predetermined C-SSs to user terminals by using system information (SIBs).

In this case, the radio base station reports, to user terminals, information about the configurations of multiple PRACH resource sets, information about the configurations of multiple C-SSs, and information about the associations between the PRACH resource sets and the C-SSs. Alternatively, a method of determining which PRACH resource sets are associated with which C-SSs based on information about the configuration of each PRACH resource set may be provided in advance.

A user terminal selects a predetermined PRACH resource set and transmits a PRACH (message 1). In this case, the user terminal can select a predetermined PRACH resource set based on the requirement for the communication service the user terminal uses, the user terminal's capabilities and so on. For example, when using URLLC, the user terminal selects a PRACH resource set that is configured in association with a C-SS to which a short TTI duration and a high subcarrier spacing are applied, and transmits the PRACH.

When the radio base station receives the PRACH transmitted from the user terminal, in subsequent random access procedures (for example, message 2), the radio base station transmits downlink control information using the C-SS associated with the PRACH resource set that was used to transmit the PRACH.

In subsequent random access procedure, the user terminal can receive downlink control information by monitoring the C-SS associated with the PRACH resource set which the user terminal used to transmit the PRACH. By this means, it is possible to transmit and receive C-SSs based on transmission features that are suitable for the communication services used by individual user terminals. In this case, a user terminal can presume that a predetermined C-SS (a C-SS of predetermined transmission features) associated with the PRACH resource set which the user terminal has used will be transmitted, and monitor this predetermined C-SS on a selective basis.

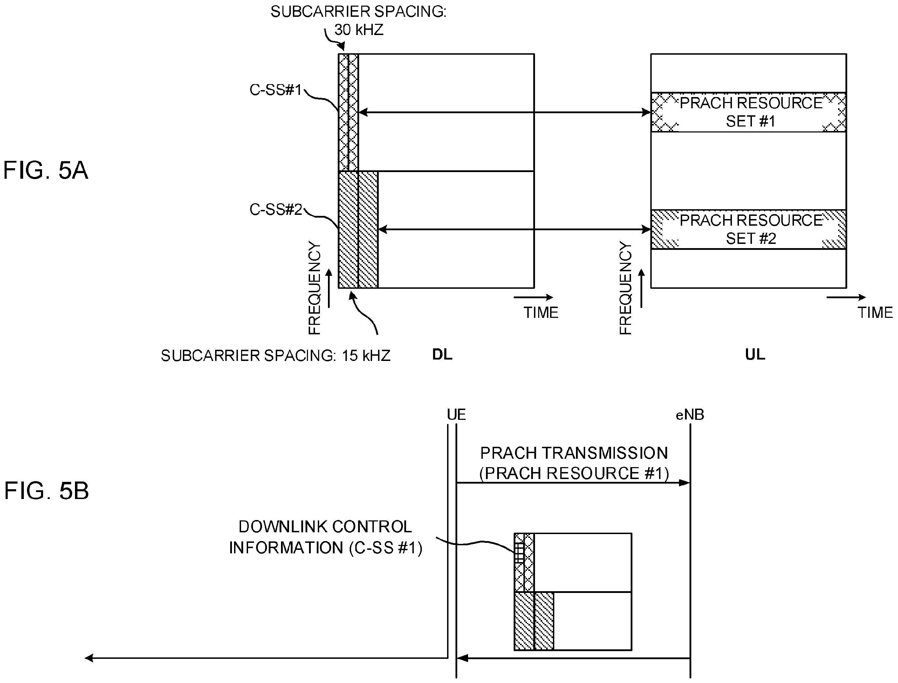

FIG. 5 shows a case where two C-SSs with different transmission features are configured. In the case shown here, C-SS #1 is transmitted at a subcarrier spacing of 30 kHz, and C-SS #2 is transmitted at a subcarrier spacing of 15 kHz. In addition, a case is shown here where C-SS #1 and C-SS #2 are allocated to different physical resources.

Also, different PRACH resource sets are associated with C-SS #1 and C-SS #2. In the case shown here, PRACH resource set #1 is associated with C-SS #1, and PRACH resource set #2 is associated with C-SS #2 (see FIG. 5A).

The user terminal selects the PRACH resource (C-SS) to use in PRACH transmission based on the requirement for the communication service type which the user terminal uses (or supports). For example, the user terminal selects PRACH resource set #1 when using a communication service to which a high subcarrier spacing (for example, 30 kHz) is applied. Meanwhile, when using a communication service where a low subcarrier spacing (for example, 15 kHz) applies, the user terminal selects PRACH resource set #2. Then, the user terminal transmits the PRACH using the selected PRACH resource.

Upon receiving the PRACH, the radio base station transmits downlink control information (such as message 2) using the C-SS associated with the PRACH resource that was used to transmit the PRACH (see FIG. 5B). For example, if the radio base station receives a PRACH transmitted using PRACH resource set #1, the radio base station allocates downlink control information for message 2 to C-SS #1 that is transmitted at a subcarrier spacing of 30 kHz. The user terminal monitors the C-SS (here, C-SS #1) associated with the PRACH resource the user terminal selected itself, and receives the downlink control information.

Although FIG. 5 shows a case where multiple C-SSs with varying subcarrier spacings are configured, this is by no means limiting. FIG. 6 shows a case of configuring multiple C-SSs with different TTI durations.

FIG. 6 shows a case where C-SS #1 is transmitted in a short TTI duration (also referred to as, for example, a "mini slot," a "short TTI" and so on) and where C-SS #2 is transmitted in a long TTI duration (also referred to as, for example, a "slot," a "long TTI," and so on). Also a case is shown here where C-SS #1 and C-SS #2 are allocated to different physical resources. Note that, between C-SS #1 and C-SS #2, not only the TTI duration, but also the subcarrier spacing may be configured to vary.

Different PRACH resource sets are associated with C-SS #1 and C-SS #2. Here, PRACH resource set #1 is associated with C-SS #1, and PRACH resource set #2 is associated with C-SS #2 (see FIG. 6A).

The user terminal selects the PRACH resource (C-SS) to use in PRACH transmission based on the requirement for the communication service type which the user terminal uses (or supports). For example, the user terminal selects PRACH resource set #1 when using a communication service to use minislots, and selects PRACH resource set #2 when using a communication service to use slots. Then, the user terminal transmits the PRACH using the selected PRACH resource.

Upon receiving the PRACH, the radio base station transmits downlink control information (such as message 2) using the C-SS associated with the PRACH resource that was used to transmit the PRACH (see FIG. 6B). For example, if the radio base station receives a PRACH transmitted using PRACH resource set #1, the radio base station allocates and transmit downlink control information for message 2 in C-SS #1, which is transmitted using a minislot. The user terminal monitors the C-SS (here, C-SS #1) associated with the PRACH resource the user terminal selected itself, and receives the downlink control information.

In this way, according to the present embodiment, PRACH resource sets, and C-SSs that employ predetermined transmission features, are configured in association with each other, and, when a user terminal transmits a PRACH, the user terminal selects a predetermined PRACH resource set and transmits the PRACH. By this means, it is possible to perform random access procedures (for example, transmission/receipt of a C-SS) based on transmission features (numerologies, for example) that are suitable for the communication services used by individual user terminals.

Note that the radio base station apparatus can use transmission features that are associated with the PRACH resource sets of PRACHs that are received not only for C-SSs, but also for the scheduling control of other DL signals (DL channels) and/or UL signals (UL channels). For example, the radio base station can use a C-SS having the same transmission features as transmission features associated with a PRACH resource set, to schedule other common information such as paging, SIBs and so on.

Alternatively, a C-SS to schedule other common information may be defined separately as a C-SS to have different transmission feature from the C-SS for use in random access procedures (C-SS having transmission features associated with the PRACH resource).

### <When One C-SS is Configured>

When one C-SS is configured, the transmission features (different transmission features) of one C-SS are changed and used in random access procedures. In this case, multiple PRACH resource sets and physical resources for one C-SS are defined. In addition, multiple transmission features are defined for one C-SS. The transmission features can be defined based on predetermined numerologies, such as the subcarrier spacings, the TTI duration and so on.

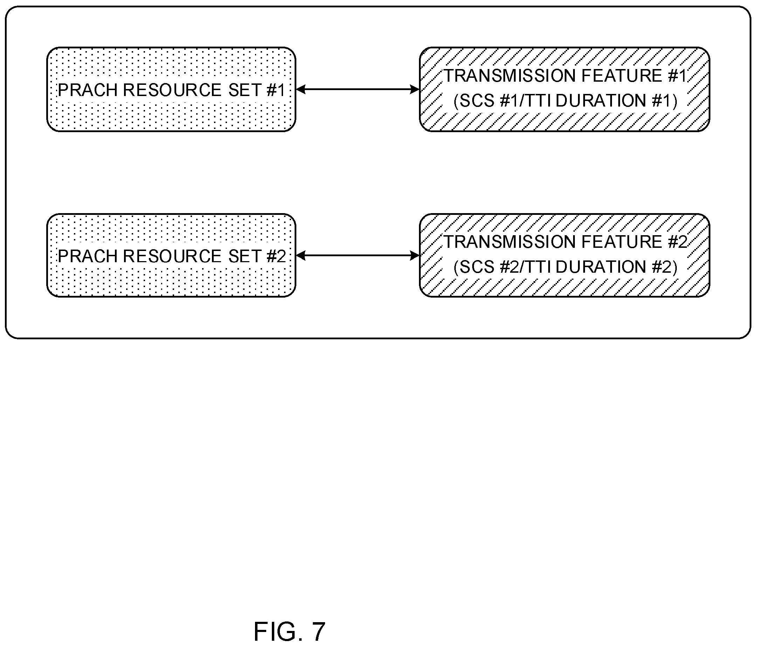

Furthermore, the PRACH resource sets and the transmission features to apply to the C-SS are defined in association with each other. For example, PRACH resource set #1 and C-SS transmission feature #1 are defined in association with each other, and PRACH resource set #2 and C-SS transmission feature #2 are defined in association with each other (see FIG. 7). In the case shown here, the first subcarrier spacing (SCS #1) and the first TTI duration (TTI duration #1) are applied as C-SS transmission feature #1, a second subcarrier spacing (SCS #2) and a second TTI duration (TTI duration #2) are applied as C-SS transmission feature #2.

Information about the associations between the PRACH resource sets and the transmission features of the C-SS may be reported in advance from a radio base station to user terminals (reported explicitly and/or reported implicitly), or may be defined in the specification. For example, the radio base station can report information about the associations between the PRACH resource sets and the transmission features of the C-SS to user terminals by using system information (SIBs).

In this case, the radio base station reports, to user terminals, information about the configurations of multiple PRACH resource sets, information about multiple transmission features that can be configured in the C-SS, information about the associations between the PRACH resource sets and the transmission features of the C-SS. Alternatively, a method of determining which PRACH resource sets are associated with which transmission features, based on information about the configuration of each PRACH resource set may be provided in advance.

A user terminal selects a predetermined PRACH resource set and transmits a PRACH (message 1). In this case, the user terminal has only to select a predetermined PRACH resource set based on the requirements for control messages following the PRACH (or based on the requirement for the communication service the user terminal uses, the user terminal's capabilities and so on). For example, when using URLLC, the user terminal selects a PRACH resource set that is configured in association with a transmission feature to which a short TTI duration and a high subcarrier spacing are applied, and transmits the PRACH.

When the radio base station receives the PRACH transmitted from the user terminal in a predetermined PRACH resource set, in subsequent random access procedures (for example, message 2), the radio base station transmits a C-SS (downlink control information) by applying the transmission features associated with the PRACH resource set.

In subsequent random access procedures, the user terminal monitors for a C-SS that is transmitted based on the transmission features associated with the PRACH resource set which the user terminal used to transmit the PRACH, and receives downlink control information. To be more specific, the user terminal controls the receiving process (including monitoring) based on the assumption that subsequent control messages (for example, message 2) are transmitted based on the predetermined transmission features. By this means, it is possible to transmit and/or receive C-SSs based on transmission features that are suitable for the communication services used by individual user terminals.

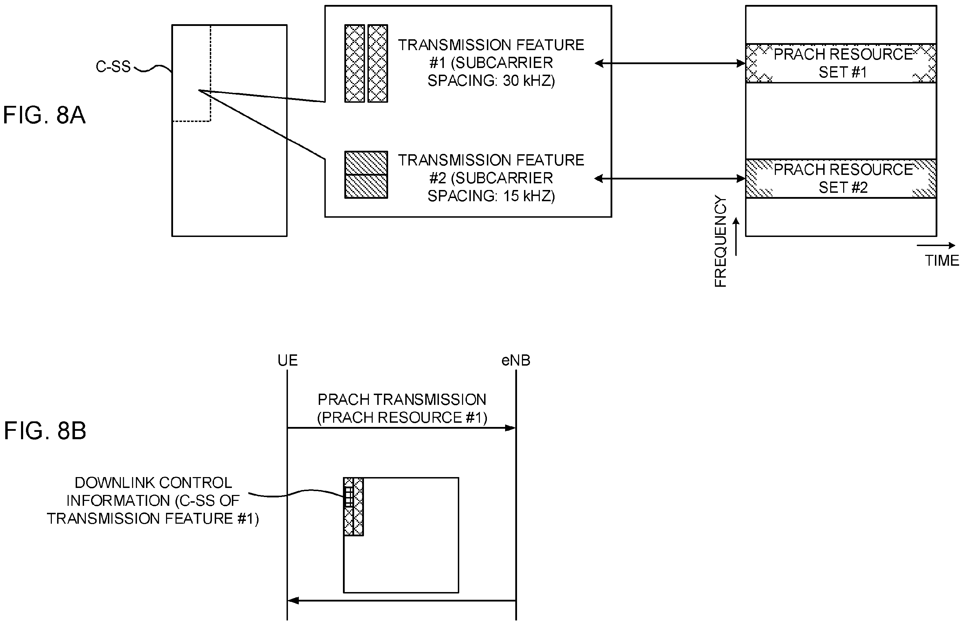

FIG. 8 shows a case where two different transmission features are changed and applied to one C-SS. Here, a case is shown in which C-SS transmission feature #1 is set to a subcarrier spacing of 30 kHz and in which C-SS transmission feature #2 is set to a subcarrier spacing of 15 kHz. In addition, one C-SS (transmission feature #1 and transmission feature #2) can be configured in the same time field and frequency field (physical resource). Obviously, these may be configured in different physical resources as well.

Also, different PRACH resource sets are associated with C-SS transmission feature #1 and transmission feature #2. Here, PRACH resource set #1 is associated with transmission feature #1, and PRACH resource set #2 is associated with transmission feature #2 (see FIG. 8A).

The user terminal selects the PRACH resources (C-SS transmission features) to apply to PRACH transmission based on the requirement for the communication service type which the user terminal uses (or supports). For example, the user terminal selects PRACH resource set #1 when using a communication service to which a high subcarrier spacing (for example, 30 kHz) is applied, and selects PRACH resource set #2 when using a communication service to which a low subcarrier spacing (for example, 15 kHz) is applied. Then, the user terminal transmits the PRACH using the selected PRACH resource.

Upon receiving the PRACH, the radio base station transmits downlink control information (such as message 2) using a C-SS to which the transmission features associates with the PRACH resource that was used to transmit the PRACH are applied (see FIG. 8B). For example, if the radio base station receives a PRACH transmitted using PRACH resource set #1, the radio base station allocates downlink control information for message 2 to the C-SS where a subcarrier spacing of 30 kHz is applied, and transmit this. The user terminal performs the receiving process (such as monitoring) of the downlink control information based on the assumption that the C-SS is transmitted based on the transmission features (here, transmission features #1) associated with the PRACH resource which the user terminal selected itself.

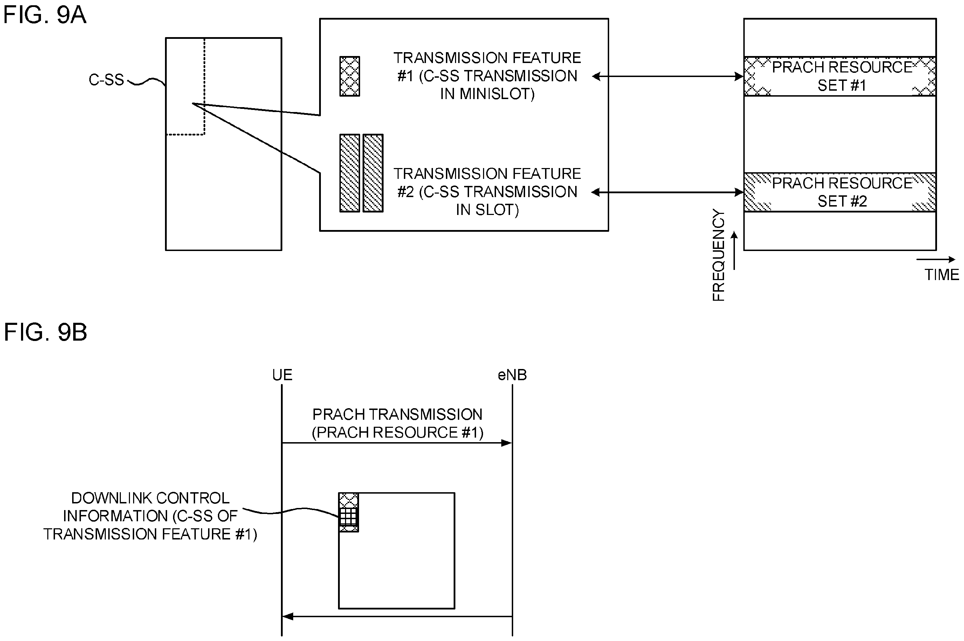

Although FIG. 8 shows a case where multiple transmission features with different subcarrier spacings are configured, this is by no means limiting. FIG. 9 shows a case where multiple transmission features with different TTI durations are configured.

In the case shown in FIG. 9, C-SS transmission feature #1 is a short TTI duration (also referred to as, for example, a "mini slot," a "short TTI," etc.) and transmission feature #2 is a long TTI duration (also referred to as, for example, a "slot," a "long TTI," etc.). Also, in the case shown here, transmission feature #1 and transmission feature #2 are allocated to overlapping time and frequency resource fields. Note that transmission feature #1 and transmission feature #2 may be configured so that not only the TTI duration, but also the subcarrier spacing varies between them.

Different PRACH resource sets are associated with transmission feature #1 and transmission feature #2. In the case shown here, PRACH resource set #1 is associated with transmission feature #1 and PRACH resource set #2 is associated with transmission feature #2 (see FIG. 9A).

The user terminal selects the PRACH resource (transmission features) to use in PRACH transmission based on the requirement for the communication service type which the user terminal uses (or supports). For example, the user terminal selects PRACH resource set #1 when using a communication service to use minislots, and selects PRACH resource set #2 when using a communication service to use slots. Then, the user terminal transmits the PRACH using the selected PRACH resource.

Upon receiving the PRACH, the radio base station transmits downlink control information (such as message 2) using a C-SS to which transmission features associated with the PRACH resource that was used to transmit the PRACH (see FIG. 9B) are applied. For example, if the radio base station receives a PRACH transmitted using PRACH resource set #1, the radio base station allocates downlink control information for message 2 to a C-SS that is transmitted using a minislot. The user terminal performs the receiving process (including monitoring) of the downlink control information based on the assumption that the C-SS is transmitted based on the transmission features (here, transmission feature #1) associated with the PRACH resource the user terminal selected itself.

In this way, according to the present embodiment, PRACH resource sets and the transmission features of a C-SS are configured in association with each other, and, when a user terminal transmits a PRACH, the user terminal selects a predetermined PRACH resource set and transmits the PRACH. By this means, it is possible to perform random access procedures (for example, transmission and receipt of a C-SS) based on transmission features (numerologies, for example) that are suitable for the communication services used by individual user terminals.

Note that the radio base station apparatus can use transmission features that are associated with the PRACH resource sets of PRACHs that are received not only for C-SSs, but also for the scheduling control of other DL signals (DL channels) and/or UL signals (UL channels). For example, the radio base station can apply the same transmission features as transmission features associated with a PRACH resource set, to schedule other common information such as paging, SIBs and so on.

Alternatively, a C-SS to schedule other common information may be defined separately as a C-SS to have different transmission feature from the C-SS for use in random access procedures (transmission features associated with PRACH resources).

### (Radio Communication System)

Now, the structure of the radio communication system according to one embodiment of the present invention will be described below. In this radio communication system, communication is performed using one or a combination of the radio communication methods according to the herein-contained embodiments of the present invention.

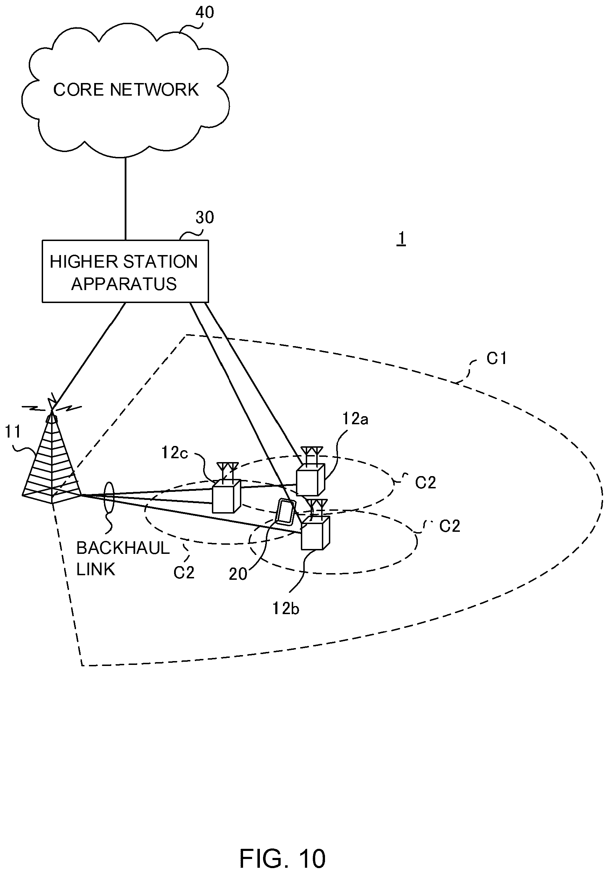

FIG. 10 is a diagram to show an example of a schematic structure of a radio communication system according to an embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G, "IMT-Advanced," "4G (4th generation mobile communication system)," "5G (5th generation mobile communication system)," "FRA (Future Radio Access)," "New-RAT (Radio Access Technology)," "NR (New Radio)" and so on, or may be seen as a system to implement these.

The radio communication system 1 includes a radio base station 11 that forms a macro cell C1 having a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement of cells and user terminals 20 are not limited to those shown in the drawings.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB" (eNodeB), a "gNB," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used.

The radio communication system 1 may be configured so that different numerologies are used within cells and/or between cells. Note that a numerology refers to, for example, a set of communication parameters (for example, the subcarrier spacing, the bandwidth, etc.) that are used to transmit and receive a certain signal.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data, higher layer control information and so on are communicated by the PUSCH. Also, downlink radio quality information (CQI: Channel Quality Indicator), delivery acknowledgement information and so on are communicated by the PUCCH. By means of the PRACH, random access preambles for establishing connections with cells are communicated.

In the radio communication systems 1, the cell-specific reference signal (CRS: Cell-specific Reference Signal), the channel state information reference signal (CSI-RS: Channel State Information-Reference Signal), the demodulation reference signal (DMRS: DeModulation Reference Signal), the positioning reference signal (PRS: Positioning Reference Signal) and so on are communicated as downlink reference signals. Also, in the radio communication system 1, the measurement reference signal (SRS: Sounding Reference Signal), the demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

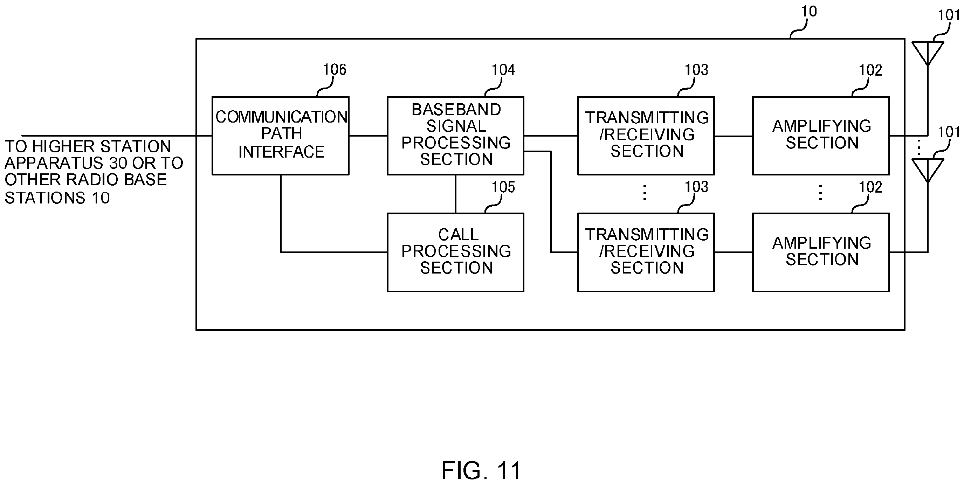

FIG. 11 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 transmit a downlink control channel (for example, an NR-PDCCH) using a search space (a C-SS and/or a UE-SS). In addition, the transmitting/receiving sections 103 transmit information about C-SS sets and information about the associations between PRACH resource sets and the transmission features of common search spaces (for example, the transmission features of each C-SS, the transmission features that apply to one C-SS, etc.) (see FIGs. 2, 4, 7, and so on). For example, if multiple categories that include common search spaces directed to different communication services and/or employing different transmission features are configured (see FIG. 2), the transmitting/receiving sections 103 transmit information about the common search space included in at least one of these multiple categories. In addition, the transmitting/receiving sections 103 receive a predetermined PRACH transmitted from a user terminal, and transmits a C-SS that uses transmission features corresponding to the PRACH resource that was used to transmit the PRACH (see FIGs. 5, 6, 8, 9, and so on).

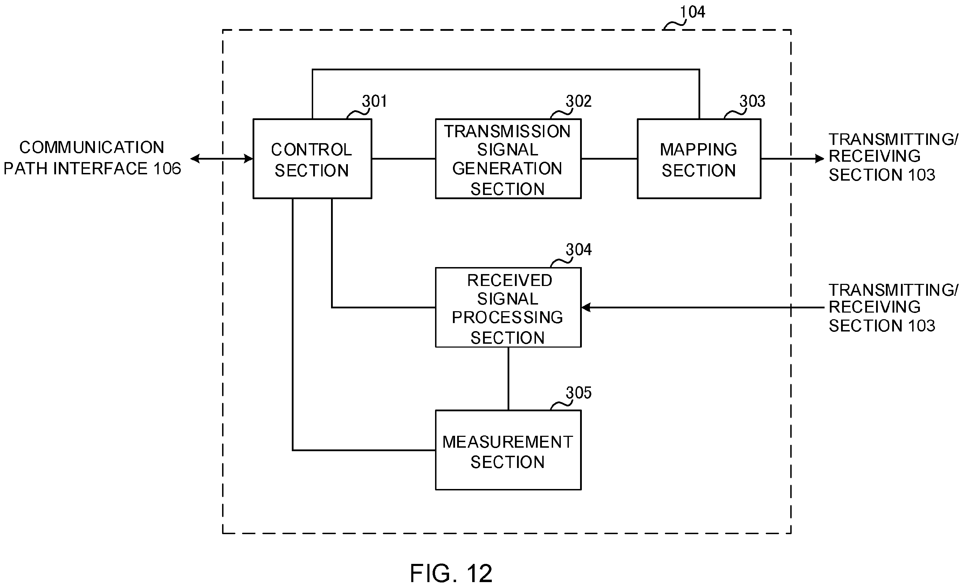

FIG. 12 is a diagram to show an example of functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH) and downlink control signals (for example, signals communicated in downlink control channels). Also, the control section 301 controls the generation of downlink control signals (for example, delivery acknowledgement information and so on), downlink data signals and so on, based on whether or not retransmission control is necessary, which is decided in response to uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

In addition, the control section 301 controls the scheduling of uplink data signals (for example, signals transmitted in the PUSCH), uplink control signals (for example, signals transmitted in the PUCCH and/or the PUSCH), random access preambles transmitted in the PRACH, uplink reference signals, and so on.

The control section 301 controls the transmission of downlink control channels using the C-SS and/or the UE-SS. For example, the control section 301 receives a predetermined PRACH transmitted from a user terminal, and controls the transmission of a C-SS that uses transmission features corresponding to the PRACH resource that was used to transmit the PRACH (see FIGs. 5, 6, 8, 9, and so on).

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

When signals are received, the measurement section 305 may measure, for example, the received power (for example, RSRP (Reference Signal Received Power)), the received quality (for example, RSRQ (Reference Signal Received Quality)), SINR (Signal to Interference plus Noise Ratio) and/or the like), uplink channel information (for example CSI) and so on. The measurement results may be output to the control section 301.

### (User Terminal)

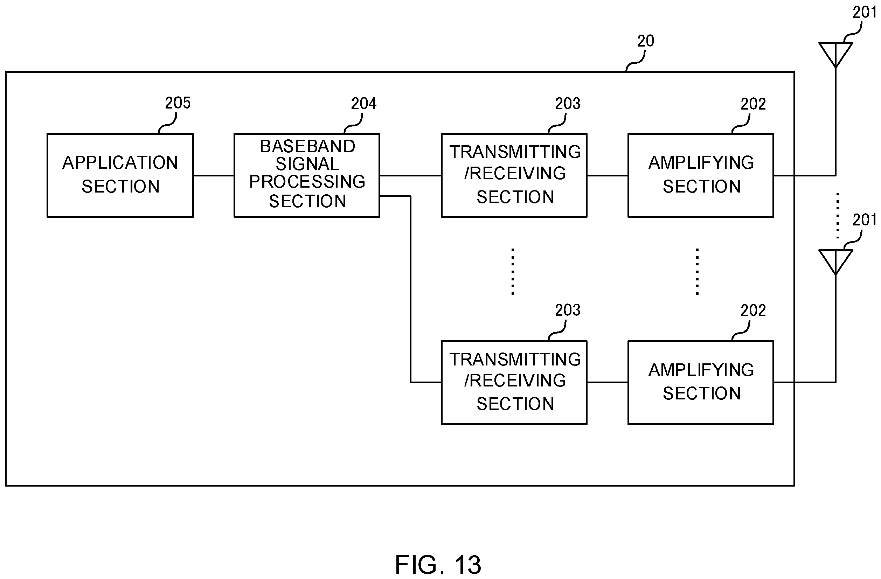

FIG. 13 is a diagram to show an example of an overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Also, among the downlink data, the broadcast information may also be forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

The transmitting/receiving sections 203 receive a downlink control channel (for example, an NR-PDCCH) that is included in a C-SS and/or a UE-SS. In addition, the transmitting/receiving sections 203 transmit information about C-SS sets and information about the associations between PRACH resource sets and the transmission features of common search spaces (for example, the transmission features of each C-SS, the transmission features that apply to one C-SS, etc.) (see FIGs. 2, 4, 7, and so on). For example, if multiple categories that include common search spaces directed to different communication services and/or employing different transmission features are configured (see FIG. 2), the transmitting/receiving sections 203 transmit information about the common search space included in at least one of these multiple categories. In addition, the transmitting/receiving sections 203 receive information about the numerologies that are applied to C-SS sets through higher layer signaling and/or physical layer signaling (L1 signaling).

The transmitting/receiving sections 203 transmit a random access preamble (PRACH, message 1, etc.) and message 3 in random access procedures, and receive a random access response (message 2) and message 4. In addition, the transmitting/receiving sections 203 receive downlink control information in a predetermined C-SS that is configured in association with the PRACH resource set that was used to transmit the PRACH (see FIGs. 5, 6, 8, 9, and so on).

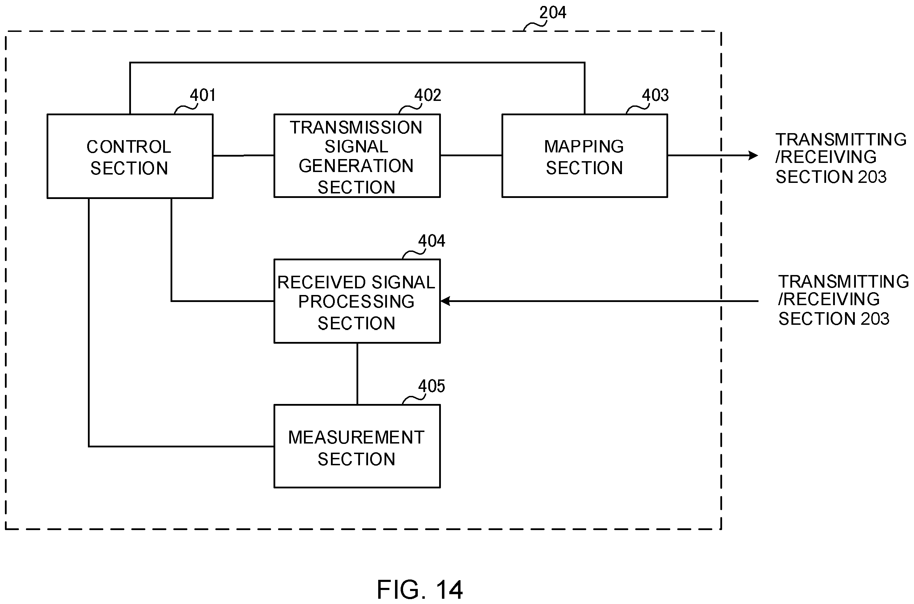

FIG. 14 is a diagram to show an example of a functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405, and so on.

The control section 401 acquires the downlink control signals (for example, signals transmitted in downlink control channels) and downlink data signals (for example, signals transmitted in the PDSCH) transmitted from the radio base station 10, via the received signal processing section 404. The control section 401 controls the generation of uplink control signals (for example, delivery acknowledgement information and so on) and/or uplink data signals based on whether or not retransmission control is necessary, which is decided in response to downlink control signals and/or downlink data signals, and so on.

The control section 401 controls the detection of search spaces that serve as candidates for allocating downlink control channels. For example, the control section 401 controls the detection of one or more common search spaces based on information that is reported in advance and/or information about the capabilities which the user terminal supports itself. Different transmission features may be applied to the common search space. Furthermore, the control section 401 can detect some or all of the C-SSs that correspond to the information that is reported in advance and/or the information about the capabilities which the user terminal supports itself.

Also, in random access procedures, the control section 401 controls the receipt (for example, monitoring) of downlink control information in a predetermined C-SS that is configured in association with the PRACH resource set that was used to transmit the PRACH. In random access procedures, multiple PRACH resource sets are configured for PRACH transmission, and one or more C-SSs with different transmission features are configured in association with these PRACH resource sets.

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. For example, the measurement section 405 performs measurements using downlink reference signals transmitted from the radio base station 10. The measurement section 405 can be constituted by a measurer, a measurement circuit or measurement apparatus that can be described based on general understanding of the technical field to which the present invention pertains.

The measurement section 405 may measure, for example, the received power (for example, RSRP), the received quality (for example, RSRQ, received SINR), down link channel information (for example CSI) and so on of the received signals. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

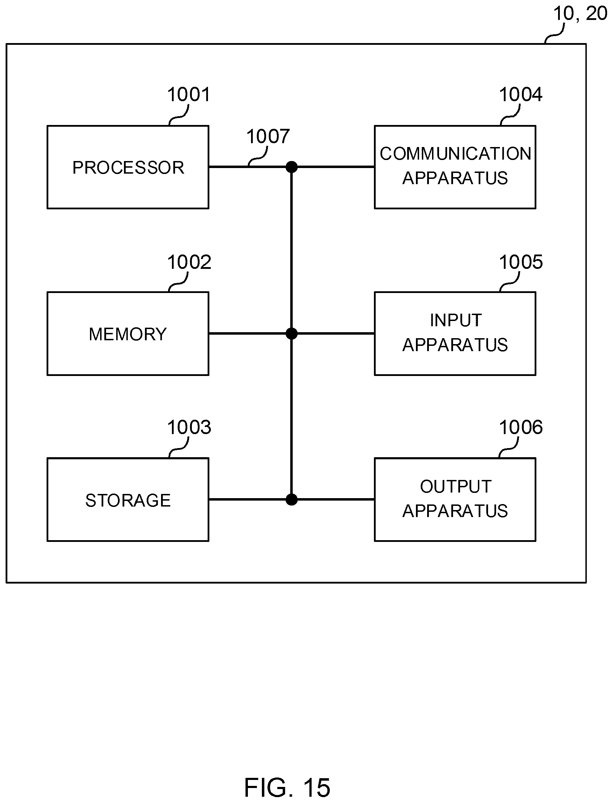

For example, the radio base station, user terminals and so on according to embodiments of the present invention may function as a computer that executes the processes of the radio communication method of the present invention. FIG. 15 is a diagram to show an example hardware structure of a radio base station and a user terminal according to an embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006And a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and/or the like for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time duration (for example, one ms) not dependent on the neurology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on neurology. Also, a slot may include a plurality of mini-slots. Each mini-slot may consist of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, one subframe may be referred to as a "transmission time interval" (TTI), or a plurality of consecutive subframes may be referred to as a "TTI," or one slot or mini-slot may be referred to as a "TTI." That is, a subframe and/or a TTI may be a subframe (one ms) in existing LTE, may be a shorter period than one ms (for example, one to thirteen symbols), or may be a longer period of time than one ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the time interval (for example, the number of symbols) in which transport blocks, code blocks and/or codewords are actually mapped may be shorter than the TTI.

Note that, when one slot or one mini-slot is referred to as a "TTI," one or more TTIs (that is, one or more slots or one or more mini-slots) may be the minimum time unit of scheduling. Also, the number of slots (the number of mini-slots) to constitute this minimum time unit of scheduling may be controlled.

A TTI having a time duration of one ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," "a partial TTI (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding one ms, and a short TTI (for example, a shortened TTI) may be replaced with a TTI having a TTI length less than the TTI length of a long TTI and not less than one ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one mini-slot, one subframe or one TTI in length. One TTI and one subframe each may be comprised of one or more resource blocks. Note that one or more RBs may be referred to as a "physical resource block (PRB: Physical RB)," a "subcarrier group (SCG)," a "resource element group (REG)," an "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, mini-slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be transmitted to other pieces of apparatus. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information" (L1/L2 control signals), "L1 control information" (L1 control signal) and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting. The scope of the invention is determined by the scope of the appended claims.

Note that the radio communication system 1 may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Global System for Mobile communications) (registered trademark), CDMA 2000, UMB (Ultra Mobile Broadband), IEEE 802.11 (Wi-Fi (registered trademark)), IEEE 802.16 (WiMAX(registered trademark)), IEEE 802.20, WB (Ultra-WideBand), Bluetooth (registered trademark) and other appropriate radio communication technologies, and/or may be applied to next-generation systems that are enhanced base on these radio communication technologies.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure, ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention is defined by the appended claims.

## Claims

1. A terminal (20) in a New Radio, NR, communication system, the terminal comprising:
a receiving section (203) adapted to receive, from a base station, downlink control information on a downlink control channel;
a control section (401) adapted to control detection of common search spaces, which are candidates for allocating, by the base station, the downlink control channel and which correspond to different numerologies, used for communication between the terminal and said base station, based on information that is indicated by the radio base station and/or information about communication capabilities of the terminal which the terminal supports itself;
said terminal being **characterized in that** it further comprises:
a transmission section (203) adapted to transmit, to the base station, a random access preamble, PRACH,
wherein the receiving section (203) is adapted to receive the downlink control information in a given common search space of said common search spaces that is configured in association with a PRACH resource set used to transmit the PRACH by the transmission section of the terminal.

2. The terminal (20) according to claim 1, wherein:
a plurality of categories of communication services are configured, each category including a common search space of said common search spaces that is associated with a different communication service and/or has a different numerology of said numerologies; and
the receiving section (203) is adapted to receive information about a common search space that is included in at least one of the plurality of categories, as the information that is indicated by the radio base station.

3. The terminal (20) according to claim 1, wherein one or more common search spaces with different numerologies are configured for PRACH resource sets.

4. The terminal (20) according to claim 1, wherein the receiving section is adapted to receive information about associations between PRACH resource sets and the numerologies of the common search spaces, as the information that is indicated by the radio base station.

5. A radio communication method performed by a terminal (20) in a New Radio, NR, communication system, comprising the steps of:
receiving, from a base station, downlink control information on a downlink control channel;
controlling detection of common search spaces, which are candidates for allocating, by the base station, the downlink control channel and which correspond to different numerologies, used for communication between the terminal and said base station, based on information that is reported by a radio base station and/or information about communication capabilities of the terminal which the terminal supports itself;
the method being **characterized by**:
transmitting, to the base station, a random access preamble, PRACH; and
receiving the downlink control information in a given common search space of said common search spaces that is configured in association with a PRACH resource set used by the terminal to perform said transmitting of the PRACH.

## Patentansprüche

1. Endgerät (20) in einem New Radio, NR, Kommunikationssystem, wobei das Endgerät umfasst:
einen Empfangsabschnitt (203), der angepasst ist, von einer Basisstation Downlink-Steuerinformationen auf einem Downlink-Steuerkanal zu empfangen;
einen Steuerabschnitt (401), der angepasst ist, Detektion gemeinsamer Suchräume, die Kandidaten zur Zuweisung, durch die Basisstation, des Downlink-Steuerkanals sind und die unterschiedlichen Numerologien entsprechen, die zur Kommunikation zwischen dem Endgerät und der Basisstation verwendet werden, basierend auf Informationen, die von der Funkbasisstation angezeigt werden und/oder Informationen über Kommunikationskapazitäten des Endgeräts, die das Endgerät selbst unterstützt, zu steuern;
wobei das Endgerät **dadurch gekennzeichnet ist, dass** es weiter umfasst:
einen Sendeabschnitt (203), der zum Senden, an die Basisstation, einer Direktzugriffpräambel, PRACH, angepasst ist,
wobei der Empfangsabschnitt (203) angepasst ist, die Downlink-Steuerinformationen in einem vorgegebenen gemeinsamen Suchraum der gemeinsamen Suchräume zu empfangen, der in Verknüpfung mit einem PRACH-Ressourcensatz konfiguriert wird, der verwendet wird, um die PRACH durch den Sendeabschnitt des Endgeräts zu senden.

2. Endgerät (20) nach Anspruch 1, wobei:
eine Vielzahl von Kategorien von Kommunikationsdiensten konfiguriert sind, wobei jede Kategorie einen gemeinsamen Suchraum der gemeinsamen Suchräume beinhaltet, der mit einem unterschiedlichen Kommunikationsdienst verknüpft ist und/oder eine unterschiedliche Numerologie der Numerologien aufweist; und
der Empfangsabschnitt (203) angepasst ist, Informationen über einen gemeinsamen Suchraum zu empfangen, die in mindestens einer der Vielzahl von Kategorien beinhaltet sind, wie die Informationen, die von der Funkbasisstation angezeigt werden.

3. Endgerät (20) nach Anspruch 1, wobei ein oder mehrere gemeinsame Suchräume mit unterschiedlichen Numerologien für PRACH-Ressourcensätze konfiguriert sind.

4. Endgerät (20) nach Anspruch 1, wobei der Empfangsabschnitt angepasst ist, Informationen über Verknüpfungen zwischen PRACH-Ressourcensätzen und den Numerologien der gemeinsamen Suchräume zu empfangen, wie die Informationen, die von der Funkbasisstation angezeigt werden.

5. Funkkommunikationsverfahren, das von einem Endgerät (20) in einem New Radio, NR, Kommunikationssystem durchgeführt wird, wobei es die folgenden Schritte umfasst:
Empfangen von einer Basisstation von Downlink-Steuerinformationen auf einem Downlink-Steuerkanal;
Steuern von Detektion gemeinsamer Suchräume, die Kandidaten zum Zuweisen, durch die Basisstation, des Downlink-Steuerkanals sind und die unterschiedlichen Numerologien entsprechen, die zur Kommunikation zwischen dem Endgerät und der Basisstation verwendet werden, basierend auf Informationen, die von einer Funkbasisstation gemeldet werden und/oder Informationen über Kommunikationskapazitäten des Endgeräts, die das Endgerät selbst unterstützt;
wobei das Verfahren **gekennzeichnet ist durch**:
Senden an die Basisstation einer Direktzugriffpräambel, PRACH; und
Empfangen der Downlink-Steuerinformationen in einem vorgegebenen gemeinsamen Suchraum der gemeinsamen Suchräume, der in Verknüpfung mit einem PRACH-Ressourcensatz, der von dem Endgerät verwendet wird, um das Senden der PRACH durchzuführen, konfiguriert wird.

## Revendications

1. Terminal (20) dans un système de communication nouvelle radio, NR, le terminal comprenant :
une section de réception (203) conçue pour recevoir, depuis une station de base, des informations de commande en liaison descendante sur un canal de commande en liaison descendante ;
une section de commande (401) conçue pour commander une détection d'espaces de recherche communs, qui sont des candidats pour l'attribution, par la station de base, du canal de commande en liaison descendante et qui correspondent à différentes numérologies, utilisées pour la communication entre le terminal et ladite station de base, sur la base d'informations qui sont indiquées par la station de base radio, et/ou d'informations sur des capacités de communication du terminal que le terminal prend lui-même en charge ;
ledit terminal étant **caractérisé en ce qu'**il comprend en outre :
une section de transmission (203) conçue pour transmettre, à la station de base, un préambule d'accès aléatoire, PRACH,
dans lequel la section de réception (203) est conçue pour recevoir les informations de commande en liaison descendante dans un espace de recherche commun donné desdits espaces de recherche communs qui est configuré en association avec un ensemble de ressources PRACH utilisé pour transmettre le PRACH par la section de transmission du terminal.

2. Terminal (20) selon la revendication 1, dans lequel :
une pluralité de catégories de services de communication sont configurées, chaque catégorie incluant un espace de recherche commun desdits espaces de recherche communs qui est associé à un service de communication différent et/ou présente une numérologie différente desdites numérologies; et
la section de réception (203) est conçue pour recevoir des informations sur un espace de recherche commun qui est inclus dans au moins une de la pluralité de catégories, en tant qu'informations qui sont indiquées par la station de base radio.

3. Terminal (20) selon la revendication 1, dans lequel un ou plusieurs espaces de recherche communs avec différentes numérologies sont configurés pour des ensembles de ressources PRACH.

4. Terminal (20) selon la revendication 1, dans lequel la section de réception est conçue pour recevoir des informations sur des associations entre des ensembles de ressources PRACH et les numérologies des espaces de recherche communs, en tant qu'informations qui sont indiquées par la station de base radio.

5. Procédé de communication radio réalisé par un terminal (20) dans un système de communication nouvelle radio, NR, comprenant les étapes de :
réception, depuis une station de base, d'informations de commande en liaison descendante sur un canal de commande en liaison descendante ;
commande de détection d'espaces de recherche communs, qui sont candidats pour l'attribution, par la station de base, du canal de commande en liaison descendante et qui correspondent à différentes numérologies, utilisées pour la communication entre le terminal et ladite station de base, sur la base d'informations qui sont communiquées par une station de base radio et/ou d'informations sur des capacités de communication du terminal que le terminal prend lui-même en charge ;
le procédé étant **caractérisé par** :
la transmission, à la station de base, d'un préambule d'accès aléatoire, PRACH ; et
la réception des informations de commande en liaison descendante dans un espace de recherche commun desdits espaces de recherche communs qui est configuré en association avec un ensemble de ressources PRACH utilisé par le terminal pour réaliser ladite transmission du PRACH.
